# EUROPEAN PATENT APPLICATION

(11) **EP 3 312 741 A1**
(43) Date of publication of application: **25.04.2018**
(21) Application number: 17196720.1
(22) Date of filing: 16.10.2017
(51) Int. Cl.: G06F 17/30

(54) **INTERNET CACHE SERVER SYSTEM**

(30) Priority: 24.10.2016 US 201615332818
(71) Applicant: Honeywell International Inc., Morris Plains, NJ 07950 (US)
(72) Inventor: SONG, Jie, Morris Plains, NJ New Jersey 07950 (US); WANG, Haiming, Morris Plains, NJ New Jersey 07950 (US)
(74) Representative: Houghton, Mark Phillip

(57) **Abstract**

A method for providing access to the internet on a vehicle, the method comprising: receiving a request from a user device to access a first internet site; checking a vehicle cache server for the first internet site, wherein the vehicle cache server includes a restricted cache and an unrestricted cache, wherein the restricted cache is limited to identified user devices; when data from the first internet site is found in the vehicle cache server, providing the data to the user device; when the data from the first internet site is not found in the vehicle cache server: sending a request to a data pipe coupled to the vehicle for the data from the first internet site; receiving the data from the data pipe; storing the data received from the data pipe on the vehicle cache server; and providing the data to the user device.

## Description

### BACKGROUND

Conventionally, satellite communication systems are used by vehicles such as an aircraft to allow users to connect and surf the internet. These satellite communication systems can support a bandwidth enough for a few users. However, the connection is slow when multiple users in multiple aircrafts supported by the same satellite want to connect to a particular site simultaneously.

### SUMMARY

A method for access to the internet on a vehicle is provided. The method comprising: receiving a request from a user device to access a first internet site; checking a vehicle cache server for the first internet site, wherein the vehicle cache server includes a restricted cache and an unrestricted cache, wherein the restricted cache is limited to identified user devices; when data from the first internet site is found in the vehicle cache server, providing the data to the user device; when the data from the first internet site is not found in the vehicle cache server: sending a request to at least one data pipe coupled to the vehicle for the data from the first internet site; receiving the data from the at least one data pipe; storing the data received from the at least one data pipe on the vehicle cache server; and providing the data to the user device.

### DRAWINGS

Understanding that the drawings depict only exemplary embodiments and are not therefore to be considered limiting in scope, the exemplary embodiments will be described with additional specificity and detail through the use of the accompanying drawings, in which:
Figure 1 is an example of a combined internet cache server system as implemented in the embodiments described herein.
Figure 2 is illustrates an exemplary method to improve internet accessibility to users on a vehicle according to at least one embodiment described in the present disclosure.
Figure 3 illustrates an exemplary method to improve internet accessibility to user on a vehicle according to at least one embodiment described in the present disclosure.

In accordance with common practice, the various described features are not drawn to scale but are drawn to emphasize specific features relevant to the exemplary embodiments.

### DETAILED DESCRIPTION

In the following detailed description, reference is made to the accompanying drawings that form a part hereof, and in which is shown by way of illustration specific illustrative embodiments. However, it is to be understood that other embodiments may be utilized and that logical, mechanical, and electrical changes may be made. Furthermore, the method presented in the drawing figures and the specification is not to be construed as limiting the order in which the individual steps may be performed. The following detailed description is, therefore, not to be taken in a limiting sense.

Conventionally, a user in a vehicle, such as an aircraft, is able to connect to the internet via a satellite. Each time the user wants to access some internet data, the vehicle will connect to the satellite. The bandwidth supported by the satellite is split between all users accessing the internet and slows down the access speed. Often, multiple vehicles that share the same airspace connect to the single satellite and the bandwidth supported by the satellite is to be shared by the multiple vehicles. In such an instance, the bandwidth is split with all users from all of the vehicles sharing the airspace, further slowing down the internet speed in which a single user is able to access internet data. Embodiments described herein provide cache servers in the vehicle and the satellite to reduce the bandwidth used when accessing popular internet sites.

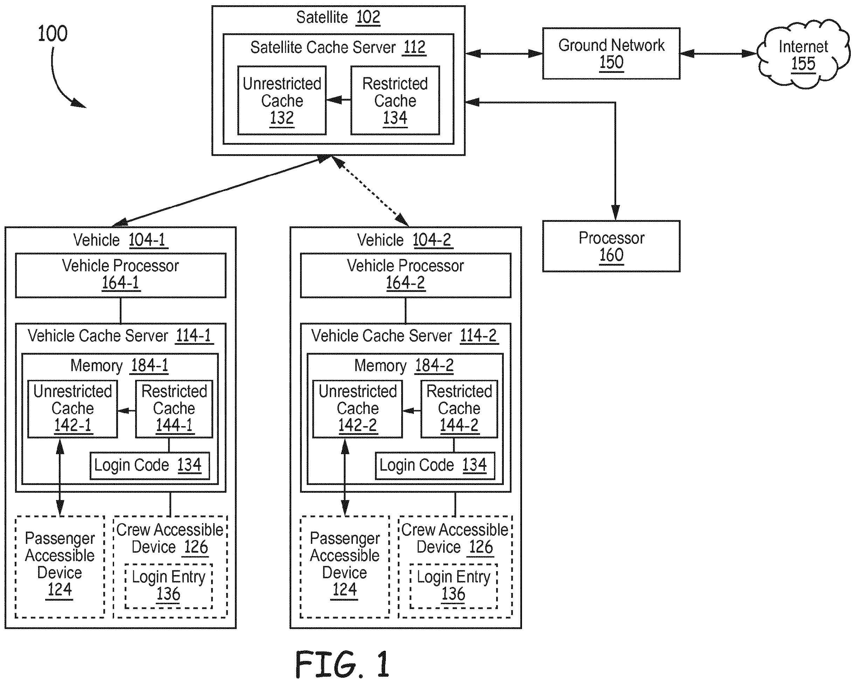

Figure 1 shows an example of a combined internet cache server system 100 as implemented in the embodiments described herein. Combined internet cache server system 100 includes at least one data pipe and one or more vehicles 104. In one example, the at least one data pipe is a satellite, such as the satellite 102 as shown in Figure 1. The data pipe is further coupled to a data pipe cache server. As shown in Figure 1, satellite 102 is coupled to a satellite cache server 112 and vehicle 104 includes a vehicle cache server 114. Vehicle 104 also includes a processor 164. Vehicle(s) 104 may further include one or more passenger accessible device(s) 124 and/or one or more crew accessible device(s) 126. The passenger accessible device 124 may include a personal portable electronic device of a passenger (such as a smartphone, a tablet or a laptop, etc), a vehicle provided electronic device such as entertainment devices attached to individual seats accessible to each passenger, etc. Crew accessible device 126 may include portable electronic devices or any other device accessible by the vehicle crew.

When a first user, such as a passenger or a crew member, accesses a first internet site (such as a website%webpage, an internet video, an internet image, etc.), the internet data from this first internet site is cached on both the vehicle cache server 114 as well as the satellite cache server 112. In one embodiment, when a second user in the same vehicle subsequently attempts to access the first internet site, the second user is provided access to the cached data corresponding to the first internet site that is stored in vehicle cache server 114.

In an embodiment, when the second user is in a second vehicle 104-2 that is supported by the same satellite 102, the second user is provided access to the cached data corresponding to the first internet site that is stored in the satellite cache server 112. In such an embodiment, the cached data accessed via the satellite 102 is further cached in the vehicle cache server 114-2 of the second vehicle 104-2. When a third user in the second vehicle 104-2 attempts to access the first internet site, the third user is provided access to the cached data corresponding to the first internet site stored in vehicle cache server 114-2. Accessing the data by using the vehicle's cache server 114 reduces the network flow between vehicle(s) 104 and satellite 102, and reduces the network flow between satellite 102 and ground station 150, thus, providing faster internet access to the user(s) in a cost effective manner while reducing the bandwidth used by satellite 102.

Each vehicle cache server 114 is further partitioned into an unrestricted cache 142 and a restricted cache 144. The restricted cache 144 is accessible to certain users such as the vehicle crew (for example, a pilot or a flight attendant of an airplane) but not to all users. The unrestricted cache 142 is accessible to all users. For example, when a pilot of vehicle 104 accesses a first internet site, the internet data from the first internet site is cached in the restricted cache 144 of the vehicle cache server 114. When a co-pilot or a flight attendant of vehicle 104 attempts to subsequently access the internet data from the first internet site, access is provided to the cached data in the restricted cache 144.

This cached data in the restricted cache 144 corresponding to the first internet site, however, is not accessible to the passengers. When a passenger subsequently attempts to access the internet data from the first internet site, the passenger is not provided access to the cached data in the restricted cache 144. Rather, vehicle 104 connects to satellite 102 to provide the passenger access to the first internet site. After the passenger has access to the first internet site, the data from the first internet site can be cached in the unrestricted cache 142 and subsequent passenger users have access to the cached data in unrestricted cache 142.

In exemplary embodiments, the users can be identified as a member of the vehicle crew based on login code 134 input into login entry 136 displayed on the crew accessible device 126. For example, when a user attempts to access the internet, a login entry 136 is displayed on a display of user device such as the passenger accessible device 124 and/or crew accessible device 126. The user has the option to input a login code 134 into login entry 136 using an input device (such as keyboard, keys on touch screen of the user device, etc.) If the user does not have access to a login code, the user has the option to cancel out of login entry 136. If the user enters a login code, the vehicle processor 164 determines that the entered login code is a login code 134 corresponding to an identified user device. The identified user device is then provided access to restricted cache 144 of vehicle 104.

In an embodiment, the data pipe cache server is further partitioned into a restricted data pipe cache and an unrestricted data pipe cache. In the example shown in Figure 1, satellite cache server 112 is partitioned into restricted satellite cache 134 and unrestricted satellite cache 132, such that the cached data in restricted cache 144 is stored in restricted satellite cache 134 and cached data in unrestricted cache 142 is stored in unrestricted satellite cache 132.

Further, in an embodiment, cached data on restricted cache 144 is provided higher priority than cached data on unrestricted cache 142. For example, the pilot of a first airplane flight may access a website providing airport information. Multiple crew members on that flight or subsequent flights through the day may subsequently need access to this website. In an embodiment, this information is cached on a vehicle restricted cache 144 and restricted satellite cache 134 when the pilot of a first airplane accesses it. A passenger on the first airplane may also have accessed this website and in one embodiment, is cached on a vehicle unrestricted cache 142 and unrestricted satellite cache 132. When a second passenger and a second pilot simultaneously attempt to access this airport information website, the pilot will have faster access to the website via the restricted cache 144 and/or 134 because of higher priority.

In another example, a first passenger may access an internet site of a video that is going viral. This viral video data is cached in the vehicle unrestricted cache 142 and in some embodiments, the viral video data is also cached in the unrestricted satellite cache 132. When a second passenger attempts to access this viral video internet site at the same time as the second pilot attempt to access the airport information website cached in the restricted cache 144 and/or 134, the pilot will have faster access to the website via the restricted cache 144 and/or 134 because of higher priority.

Further, in an embodiment, higher priority is provided to access the cached data on unrestricted cache 142 and/or 132 based on the type of passenger. For example, a passenger who is a member of the frequent flyer program may be provided with higher priority over a passenger who is not a member. In such an example, when a pilot, a member passenger and a non-member passenger simultaneously try to access internet data cached in the vehicle cache server, the pilot having access to the restricted cache has the highest priority, the member passenger has mid-level priority and the non-member passenger has the lowest priority.

In one embodiment, the cache data stored in restricted cache 144 can be imported into unrestricted cache 142. In one embodiment, the cache data stored in the restricted cache 134 can be imported into unrestricted cache 132. In an embodiment, because restricted cache 144 and 134 are provided higher priority, cached data from the unrestricted caches 142 and 132 cannot be imported into restricted caches 144 and 134 respectively.

Vehicle 104 is further coupled to a vehicle processor 164. In processor 164 implements at least some of the processing described herein. In exemplary embodiments, the at least one processor 164 includes at least one programmable processor, such as a microprocessor, a microcontroller, an application-specific integrated circuit (ASIC), a field-programmable gate array (FPGA), a field-programmable object array (FPOA), or a programmable logic device (PLD). The at least one processor 164 described above may include or function with software programs, firmware or other computer readable instructions for carrying out various methods, process tasks, calculations, and control functions, described herein. These instructions are typically stored on any appropriate computer readable medium used for storage of computer readable instructions or data structures, such as memory 184. The computer readable medium can be implemented as any available media that can be accessed by a general purpose or special purpose computer or processor, or any programmable logic device. Suitable processor-readable media may include storage or memory media such as magnetic or optical media. For example, storage or memory media may include conventional hard disks, Compact Disk - Read Only Memory (CD-ROM), volatile or non-volatile media such as Random Access Memory (RAM) (including, but not limited to, Synchronous Dynamic Random Access Memory (SDRAM), Double Data Rate (DDR) RAM, RAMBUS Dynamic RAM (RDRAM), Static RAM (SRAM), etc.), Read Only Memory (ROM), Electrically Erasable Programmable ROM (EEPROM), and flash memory, etc. Suitable processor-readable media may also include transmission media such as electrical, electromagnetic, or digital signals, conveyed via a communication medium such as a network and/or a wireless link.

Vehicle processor 164 keeps track of the cached data in the vehicle cache server 114 and determines the cached data that is frequently accessed. In one embodiment, cached data stored in the vehicle cache server 114 is determined as frequently accessed when the cached data is accessed by a user at least once in an hour. In one embodiment, cached data stored in the vehicle cache server 114 is determined as frequently accessed when the cached data is accessed by a user at least once every fifteen minutes. In one embodiment, vehicle processor 164 determines the cached data most frequently accessed by the particular aircraft and updates the frequently accessed cached data using ground network 150. In one embodiment, the frequently accessed cached data is automatically updated at a selected update event or selected update time. For example, in one embodiment, this selected update event may be when an aircraft is on the ground prior to takeoff. In one embodiment, the selected update event may be when the memory of the vehicle cache server 114 is full. In such an embodiment, based on determination by vehicle processor 164, the least frequently accessed cached data is removed from the vehicle cache server 114 and the frequently accessed cached data is updated. In one embodiment, the selected update time may be at certain point in time of the day, wherein the cached data is updated at given time intervals (such as at midnight every day, every two weeks, etc.).

In one embodiment, vehicle processor 164 is further configured to remove the cached data in vehicle cache server 114. In one embodiment, after determining the cached data that is frequently accessed, vehicle processor 164 removes the least frequently accessed cached data. In one embodiment, vehicle processor 164 removes some or all of the cached data at a selected removal event or selected removal time. For example, in one embodiment, this selected removal event may be after the aircraft has landed and arrived at the gate. In one embodiment, the selected removal event may be when the memory of the vehicle cache server 114 is full. In one embodiment, this selected removal event may be after an indication by the aircraft crew of completion of final trip of the day. In one embodiment, the selected removal time may be at certain point in time of the day, wherein some (such as least frequently accessed cached data) or all the cached data is removed at given time intervals (such as at midnight every day, every two weeks, etc.).

Data pipe coupled to vehicle 104 is further coupled to a processor 160. In the example shown in Figure 1, this data pipe is a satellite 102 that is coupled to processor 160. Processor 160 keeps a track of the cached data in the satellite cache server 112 and determines the cached data in the satellite cache server 112 that is frequently accessed. In one embodiment, processor 160 determines the cached data most frequently accessed and updates the frequently accessed cached data using ground network 150. In one embodiment, the frequently accessed cached data is automatically updated at a selected update event or selected update time. For example, in one embodiment, this selected update event may be when the memory of the satellite cache server 112 is full. In such an embodiment, based on determination by processor 160, the least frequently accessed cached data is removed from the satellite cache server 112 and the frequently accessed cached data is updated. In one embodiment, the selected update time may be at certain point in time of the day, wherein the cached data is updated at given time intervals (such as at midnight every day, every two weeks, etc.).

In one embodiment, processor 160 is further configured to remove the cached data in satellite cache server 112. In one embodiment, after determining the cached data that is frequently accessed, processor 160 removes the least frequently accessed cached data. In one embodiment, processor 160 removes some or all of the cached data at a selected removal event or selected removal time. In one embodiment, this selected removal event may be when the memory of the satellite cache server 112 is full. In one embodiment, the selected removal time may be at certain point in time of the day, wherein some (such as least frequently accessed cached data) or all the cached data is removed at given time intervals (such as at midnight every day, every two weeks, etc.).

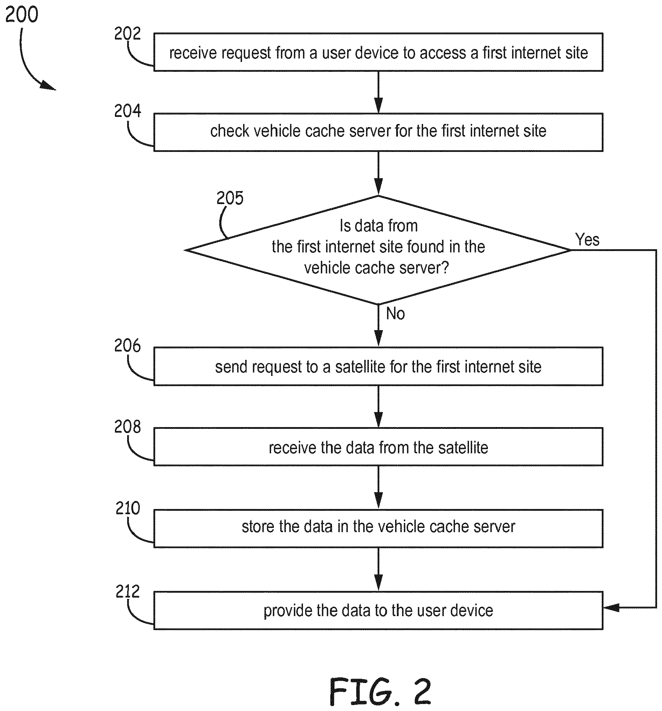

Figure 2 is a flow diagram showing an exemplary method 200 for providing access to the internet on a vehicle, such as the vehicle 104. The exemplary method 200 is described from the perspective of a vehicle, such as the vehicle 104. As discussed herein, the method 200 is described with respect to examples of a combined internet cache server system 100 as shown in Figure 1. Method 200 may apply to other examples of an internet cache server systems as well. In example embodiments, the vehicle is an aircraft.

Method 200 begins at block 202 with receiving a request from a user device, such as a passenger accessible device 124 or a crew accessible device 126 to access a first internet site. In example embodiments, method 200 comprises determining that the user device requesting access is an identified user device.

Method 200 then proceeds to block 204 with checking a vehicle cache server, such as vehicle cache server 114 for the first internet site. Method 200 then proceeds to block 205 to determine whether data from the first internet site is found in the vehicle cache server. When the data from the first internet site is found in the vehicle cache server, method 200 proceeds to block 212 with providing the data to the user device.

In exemplary embodiments, the vehicle cache server includes a restricted cache, such as a restricted cache 142 and an unrestricted cache, such as an unrestricted cache 144, wherein the restricted cache is accessible by the vehicle crew via identified user devices, such as crew accessible device 126. In example embodiments, checking the vehicle cache server for the first internet site includes checking the restricted cache for the first internet site. When the data from the first internet site is found on the restricted cache, and when it is determined that the user device requesting access is an identified user device, the user device is provided access to the data from the first internet site found on the restricted cache of the vehicle cache server.

When the data from the first internet site is not found in the vehicle cache server, method 200 proceeds to block 206 with sending a request to at least one data pipe coupled to the vehicle such as satellite 102 for the first internet site. Method 200 then proceeds to block 208 with receiving the data from the at least one data pipe. Method 200 then proceeds to block 210 with storing the data received from the at least one data pipe on the vehicle cache server. In exemplary embodiments, when the vehicle receives an indication from the data pipe that the data from the first internet site was found on a restricted data pipe cache, storing the data on the vehicle cache server comprises storing the data on the restricted cache of the vehicle cache server. Method 200 then proceeds to block 212 with providing the received data to the user device requesting access. In exemplary embodiments, the data pipe is a satellite.

In exemplary embodiments, storing the data in a vehicle cache server further comprises storing the data in one of the restricted cache or the unrestricted cache of the vehicle cache server. In a further embodiment of method 200, higher priority access is provided to data stored on the restricted cache than the data stored on the unrestricted cache. For example, when a vehicle crew member requests access to data from a first internet site stored on the restricted cache and a passenger requests access to another site stored on the unrestricted cache, higher priority is provided to data stored on the restricted cache and the vehicle crew member is provided access prior to the passenger. In exemplary embodiments, method 200 comprises importing some or all of the data stored on the restricted cache to the unrestricted cache.

In exemplary embodiments, method 200 further comprises updating the vehicle cache server. At a selected time or a selected event, the vehicle cache server is updated by retrieving latest data from the first internet site via a ground network and storing the latest data as the data from the first internet site. In one example, the vehicle cache server is automatically updated at the selected time or the selected event. In one exemplary embodiment of method 200, this selected update event may be when an aircraft is on the ground prior to takeoff. In exemplary embodiment of method 200, the selected update event may be when the memory of the vehicle cache server is full. In one embodiment, the selected update time may be at certain point in time of the day, wherein the cached data is updated at given time intervals (such as at midnight every day, every two weeks, etc.).

In exemplary embodiments, method 200 further comprises removing the data of the first internet site at a selected time or a selected event. In one embodiment, the selected removal event may be when the memory of the vehicle cache server is full. In one embodiment, this selected removal event may be after an indication by the aircraft crew of completion of final trip of the day. In one embodiment, the selected removal time may be at certain point in time of the day, wherein some (such as least frequently accessed cached data) or all the cached data is removed at given time intervals (such as at midnight every day, every two weeks, etc.). In exemplary embodiments, method 200 further comprises determining frequency of usage of the data of first internet site stored on the vehicle cache server. In further exemplary embodiments, based on the determination of the frequency of usage of the data of the first internet site, method 200 proceeds to updating of the vehicle cache server and/or the removing of the data of the first internet site on the vehicle cache server.

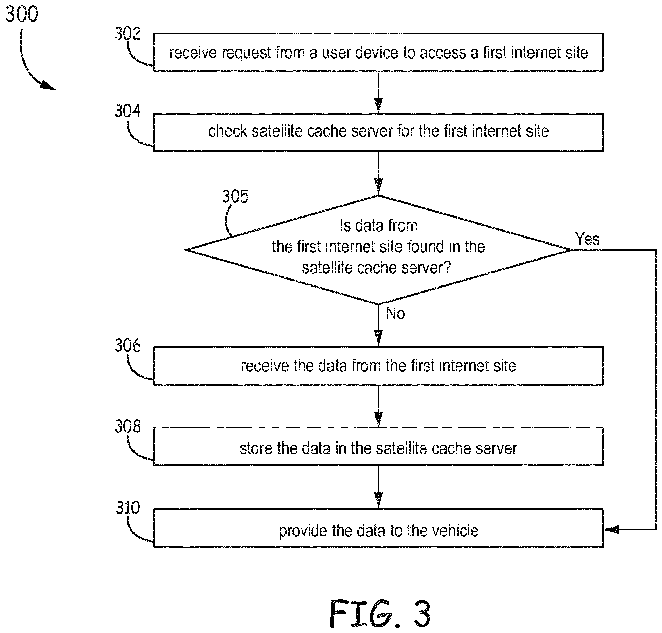

Figure 3 is a flow diagram showing an exemplary method 300 for providing access to the internet on a vehicle, such as the vehicle 104 via a data pipe. In exemplary embodiments, this data pipe is a satellite, such as satellite 102. The exemplary method 300 is described from the perspective of a data pipe, such as satellite 102. As discussed herein, the method 300 is described with respect to examples of an internet cache server system 100 as shown in Figure 1. Method 300 may apply to other examples of an internet cache server systems as well. In example embodiments, the vehicle is an aircraft.

Method 300 begins at block 302 with receiving a request from a vehicle to access data from a first internet site. In example embodiments, method 300 further comprises determining that access to the data from the first internet site was requested by an identified user device. In some examples, such a determination may be made by a data pipe processor via an indication received with the request from the vehicle.

Method 300 then proceeds to block 304 with checking a data pipe cache server. In exemplary embodiments, the data pipe cache server is a satellite cache server, such as satellite cache server 104 for the first internet site. Method 300 then proceeds to block 305 to determine whether data from the first internet site is found in the data pipe cache server. When the data from the first internet site is found in the data pipe cache server, method 300 proceeds to block 310 with providing the data to the vehicle.

In exemplary embodiments, the data pipe cache server includes a restricted data pipe cache, such as a restricted cache 134 and an unrestricted data pipe cache, such as an unrestricted cache 132, wherein the data stored in the restricted data pipe cache is accessible to identified users via identified user devices, such as crew accessible device 126. In example embodiments, checking the data pipe cache server for the first internet site includes checking the restricted data pipe cache for the first internet site. When the data from the first internet site is found on the restricted data pipe cache, and when it is determined that the user device requesting access is an identified user device, the vehicle is provided access to the data from the first internet site found on the restricted data pipe cache of the data pipe cache server. An indication that the data was found on the restricted data pipe cache server may also be provided along with the access.

When the data from the first internet site is not found in the data pipe cache server, method 300 proceeds to block 306 with retrieving the data from the first internet site. Method 300 then proceeds to block 308 storing the data from the first internet site on the data pipe cache server. In exemplary embodiments, storing the data on the data pipe cache server further comprises storing the data in one of the restricted data pipe cache or the unrestricted data pipe cache of the data pipe cache server. In an example when the data pipe cache server is a satellite cache server, the satellite cache server is further partitioned into restricted satellite cache and unrestricted satellite cache.

In a further embodiment of method 300, higher priority access is provided to data stored on the restricted data pipe cache than the data stored on the unrestricted data pipe cache. For example, when an indication is received that an identified user such as a crew member is requesting access to data from a first internet site stored on the restricted data pipe cache and another indication is received that an unidentified user such as a passenger requests access to another site stored on the unrestricted data pipe cache, higher priority is provided to data stored on the restricted data pipe cache and the vehicle is provided access to the first internet site stored on the restricted data pipe cache prior to the data from the other site stored on the unrestricted data pipe cache. In exemplary embodiments, method 300 comprises importing some or all of the data stored on the restricted data pipe cache to the unrestricted data pipe cache.

Method 300 then proceeds to block 310 with providing the data from the first internet site to the vehicle. In exemplary embodiments, method 300 further comprises updating the data pipe cache server. At a selected time or a selected event, the data pipe cache server is updated by retrieving latest data from the first internet site via a ground network and storing the latest data as the data from the first internet site. In one example, the data pipe cache server is automatically updated at the selected time or the selected event. In one exemplary embodiment of method 300, this selected data pipe update event may be when the memory of the data pipe cache server is full. In one embodiment, the selected data pipe update time may be at certain point in time of the day, wherein the cached data is updated at given time intervals (such as at midnight every day, every two weeks, etc.).

In exemplary embodiments, method 300 further comprises removing the data of the first internet site in the data pipe cache server at a selected time or a selected event. In one embodiment, this selected removal event may be after an indication by the aircraft crew of completion of final trip of the day. In one embodiment, the selected data pipe removal event may be when the memory of the data pipe cache server is full. In one embodiment, the selected data pipe removal time may be at certain point in time of the day, wherein some (such as least frequently accessed cached data) or all the cached data is removed at given time intervals (such as at midnight every day, every two weeks, etc.). In exemplary embodiments, method 300 further comprises determining frequency of usage of the data of first internet site stored on the data pipe cache server. In further exemplary embodiments, based on the determination of the frequency of usage of the data of the first internet site, method 300 proceeds to updating of the data pipe cache server and/or the removing of the data of the first internet site on the data pipe cache server.

### EXAMPLE EMBODIMENTS

Example 1 includes a method for providing access to the internet on a vehicle, the method comprising: receiving a request from a user device to access a first internet site; checking a vehicle cache server for the first internet site, wherein the vehicle cache server includes a restricted cache and an unrestricted cache, wherein the restricted cache is limited to identified user devices; when data from the first internet site is found in the vehicle cache server, providing the data to the user device; when the data from the first internet site is not found in the vehicle cache server: sending a request to at least one data pipe coupled to the vehicle for the data from the first internet site; receiving the data from the at least one data pipe; storing the data received from the at least one data pipe on the vehicle cache server; and providing the data to the user device.
Example 2 includes the method of Example 1, further comprising updating the vehicle cache server, wherein updating the vehicle cache server comprises: retrieving latest data from the first internet site via a ground network at a selected time or a selected event; and storing the latest data from the first internet site as the data from the first internet site on the vehicle cache server.
Example 3 includes the method of any of Examples 1-2, further comprising: removing the data of the first internet site on the vehicle cache server at a selected time or a selected event.
Example 4 includes the method of any of Examples 1-3, further comprising: determining frequency of usage of the data of first internet site stored on the vehicle cache server.
Example 5 includes the method of any of Examples 1-4, further comprising: determining that the user device requesting access is an identified user device; checking the restricted cache of the vehicle cache server for the data from the first internet site; and when the data from the first internet site is found on the restricted cache server and when the user device requesting access is an identified user, providing the data to the user device.
Example 6 includes the method of any of Examples 1-5, wherein storing the data in vehicle cache server further comprises storing the data in one of the restricted cache server or the unrestricted cache server.
Example 7 includes the method of Example 6, further comprising: providing higher priority access to the data stored on the restricted cache than to the data stored on the unrestricted cache.
Example 8 includes the method of any of Examples 6-7, further comprising: importing at least some of the data stored on the restricted cache of the vehicle cache server to the unrestricted cache of the vehicle cache server.
Example 9 includes the method of any of Examples 1-8, wherein the vehicle is an aircraft.
Example 10 includes an internet cache server system comprising: at least one vehicle including: a vehicle processor; and a vehicle cache server to store data from a first internet site, the vehicle cache server including a restricted cache and a unrestricted cache, wherein the restricted cache is accessible to one or more identified user devices of the at least one vehicle; wherein when a user device requests to access a first internet site, the vehicle processor is configured to: check the vehicle cache server for the data from the first internet site; and provide the data from the first internet site to the at least one user device.
Example 11 includes the internet cache server system of Example 10, wherein when the data from the first internet site is not found on the vehicle cache server, the vehicle processor is configured to: send a request to at least one data pipe for the data from the first internet site; receive the data from the at least one data pipe; store the data received from the at least one data pipe on the vehicle cache server; and provide the data to the at least one user device.
Example 12 includes the system of Example 11, wherein the at least one data pipe is a satellite, and wherein the satellite comprises a satellite cache server that further includes a restricted satellite cache and a unrestricted satellite cache, wherein the restricted satellite cache is accessible by the one or more identified user devices.
Example 13 includes the internet cache server system of any of Examples 10-12, wherein the user device requesting access to the first internet site is an identified user device of the at least one vehicle, and the vehicle processor is further configured to: check the restricted cache of the vehicle cache server for the data from the first internet site; and provide the data found on the restricted cache to the identified user device.
Example 14 includes the internet cache server system of Example 13, wherein the vehicle processor is configured to provide higher priority access to data stored on the restricted cache than to data stored on the unrestricted cache.
Example 15 includes the internet cache server system of any of Examples 10-14, wherein the at least one vehicle is an aircraft.
Example 16 includes a method for providing access to the internet on a vehicle, the method comprising: receiving a request from the vehicle to access a first internet site; checking a data pipe cache server of a data pipe for the first internet site, wherein the data pipe is coupled to the vehicle, and wherein the data pipe cache server includes a restricted data pipe cache and an unrestricted data pipe cache, wherein the restricted data pipe cache is limited to identified user devices; when data from the first internet site is found in the data pipe cache server, providing the data to the vehicle; when the data from the first internet site is not found in the data pipe cache server: retrieving the data from the first internet site; storing the data from the first internet site on the data pipe cache server; and providing the data to the vehicle.
Example 17 includes the method of Example 16, further comprising: determining that access is requested by an identified user device of the vehicle; checking the restricted data pipe cache of the data pipe cache server for the data from the first internet site; and when the data from the first internet site is found on the restricted data pipe cache and when the access is requested by the identified user device, providing the data to the vehicle with an indication that the data was found on the restricted data pipe cache.
Example 18 includes the method of any of Examples 16-17, further comprising updating the data pipe cache server, wherein updating the data pipe cache server comprises: retrieving latest data from the first internet site via a ground network at a selected time or a selected event; and storing the latest data from the first internet site as the data from the first internet site on the data pipe cache server.
Example 19 includes the method of any of Examples 16-18, further comprising: removing the data of the first internet site on the data pipe cache server at a selected time or a selected events.
Example 20 includes the method of any of Examples 16-19, wherein the data pipe is a satellite.

Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

## Claims

1. A method for providing access to the internet on a vehicle, the method comprising:
receiving a request from a user device to access a first internet site;
checking a vehicle cache server for the first internet site, wherein the vehicle cache server includes a restricted cache and an unrestricted cache, wherein the restricted cache is limited to identified user devices;
when data from the first internet site is found in the vehicle cache server, providing the data to the user device;
when the data from the first internet site is not found in the vehicle cache server:
sending a request to at least one data pipe coupled to the vehicle for the data from the first internet site;
receiving the data from the at least one data pipe;
storing the data received from the at least one data pipe on the vehicle cache server; and
providing the data to the user device.

2. The method of claim 1, further comprising:
determining that the user device requesting access is an identified user device;
checking the restricted cache of the vehicle cache server for the data from the first internet site; and
when the data from the first internet site is found on the restricted cache server and when the user device requesting access is an identified user, providing the data to the user device.

3. The method of claim 1, wherein storing the data in vehicle cache server further comprises storing the data in one of the restricted cache server or the unrestricted cache server.

4. The method of claim 3, further comprising:
providing higher priority access to the data stored on the restricted cache than to the data stored on the unrestricted cache.

5. The method of claim 3, further comprising:
importing at least some of the data stored on the restricted cache of the vehicle cache server to the unrestricted cache of the vehicle cache server.

6. The method of claim 1, wherein the vehicle is an aircraft.

7. An internet cache server system comprising:
at least one vehicle including:
a vehicle processor; and
a vehicle cache server to store data from a first internet site, the vehicle cache server including a restricted cache and a unrestricted cache, wherein the restricted cache is accessible to one or more identified user devices of the at least one vehicle;
wherein when a user device requests to access a first internet site, the vehicle processor is configured to:
check the vehicle cache server for the data from the first internet site; and
provide the data from the first internet site to the at least one user device.

8. The internet cache server system of claim 7,
wherein when the data from the first internet site is not found on the vehicle cache server, the vehicle processor is configured to:
send a request to at least one data pipe for the data from the first internet site;
receive the data from the at least one data pipe;
store the data received from the at least one data pipe on the vehicle cache server; and
provide the data to the at least one user device.

9. The internet cache server system of claim 8, wherein the at least one data pipe is a satellite, and wherein the satellite comprises a satellite cache server that further includes a restricted satellite cache and a unrestricted satellite cache, wherein the restricted satellite cache is accessible by the one or more identified user devices.

10. The internet cache server system of claim 10, wherein the at least one vehicle is an aircraft.
